Europäisches Patentamt

European Patent Office

Office européen des brevets

(19)

(11) Numéro de publication: **0 173 365**
A1

# DEMANDE DE BREVET EUROPEEN

(21) Numéro de dépôt: **85201159.2**

(22) Date de dépôt: **10.07.85**

(51) Int. Cl.⁴: **H 04 M 1/72**

(30) Priorité: **27.07.84 FR 8411963**

(43) Date de publication de la demande: **05.03.86**
**Bulletin 86/10**

(84) Etats contractants désignés: **AT DE FR GB IT SE**

(71) Demandeur: **S.A. PHILIPS INDUSTRIELLE ET COMMERCIALE, 50 Avenue Montaigne, F-75008 Paris (FR)**

(84) Etats contractants désignés: **FR**

(71) Demandeur: **N.V. Philips' Gloeilampenfabrieken, Groenewoudseweg 1, NL-5621 BA Eindhoven (NL)**

(84) Etats contractants désignés: **DE GB IT SE AT**

(72) Inventeur: **Sanglier, Jean-François, SOCIETE CIVILE S.P.I.D. 209, rue de l'Université, F-75007 Paris (FR)**
Inventeur: **Negre, Stéphane, SOCIETE CIVILE S.P.I.D. 209, rue de l'Université, F-75007 Paris (FR)**

(74) Mandataire: **Charpail, François et al, Société Civile S.P.I.D. 209, rue de l'Université, F-75007 Paris (FR)**

(54) Procédé de gestion de l'appairage d'une base et d'un mobile notamment téléphonique et dispositif de mise en oeuvre.

(57) Le procédé consiste à effectuer un nouvel appairage à chaque nouvelle présence du mobile sur la base; cet appairage est retardé si la base et le mobile n'étaient pas déjà appairés; la base détecte (DCCB10) la nouvelle présence du mobile par l'établissement du courant de charge des accus du mobile; le code d'identification du mobile est stocké en mémoire vive, RAM interne du microprocesseur (EMM10).

"Procédé de gestion de l'appairage d'une base et d'un mobile,
notamment téléphonique, et dispositif de mise en oeuvre"

La présente invention concerne un procédé de gestion
pour gérer l'appairage entre une base et un mobile.

La présente invention concerne aussi un dispositif pour
la mise en oeuvre du dit procédé.

La présente invention s'applique notamment aux postes
d'abonné produits par l'industrie du téléphone, les dits postes
comportant un socle appelé base relié au réseau téléphonique, et un
combiné sans cordon appelé mobile qui communique avec la base par
radio.

Des appareils de ce type sont décrits dans le brevet
français n° 83 01 036; ils sont conçus pour permettre à un usager
du téléphone de téléphoner, en se déplaçant, avec son mobile autour
de la base dans des limites géographiques délimitées par la qualité
nécessaire à une bonne liaison radio; compte-tenu du grand nombre
des usagers potentiels, il est connu de procéder à un appairage d'une
base avec son mobile légitime pour éviter les interférences entre
les usagers. Les procédés d'appairage connus résultent en un appairage statique et/ou manuel à l'initiative de l'usager ce qui ne va
pas sans inconvénients.

Selon la présente invention, un procédé de gestion pour
gérer l'appairage entre une base et un mobile sans cordon, l'ensemble
base plus mobile constituant un poste téléphonique, la dite base
et le dit mobile faisant partie d'une population de bases et de mobiles géographiquement dispersés, chaque base et chaque mobile comportant un emplacement de mémoire pour mémoriser un code d'identification, une base et un mobile étant dits appairés lorsque leurs
codes d'identification respectifs sont identiques, un mobile pouvant
être soit présent sur une base soit absent, chaque base et chaque
mobile comportant chacun un ensemble d'émission et de réception de
signaux radio pour, lorsque la base et le mobile sont appairés et
notamment lorsque le mobile n'est pas présent sur la base, établir, poursuivre et couper une succession de communications téléphoniques, l'état standard d'une base et d'un mobile étant un état d'attente interruptible notamment par un appel extérieur parvenant à la base en provenance du réseau téléphonique ou encore par une demande d'appel en provenance du mobile, est particulièrement remarquable en ce que, à chaque nouvelle présence d'un mobile sur une base, ledit code d'identification de la base et du mobile est modifié par une procédure qui comporte au moins les étapes suivantes :

    a) interruption de l'état standard

    c) remplacement du(des) code(s) d'identification de la base et du mobile présent sur la base par un nouveau code commun mémorisé dans la base et dans le mobile qui sont ainsi appairés

    e) retour à l'état standard.

        Ainsi l'appairage ne se fait plus manuellement au gré de l'usager mais automatiquement lors de chaque nouvelle présence d'un mobile sur la base. De plus, cet appairage est assez fréquent, ou dynamique, du fait que la présence du mobile sur la base est périodiquement requise dans le but de recharger les accumulateurs électriques généralement contenus dans le mobile pour alimenter son émetteur récepteur radio.

        Pour des raisons de prix et de poids, les accus du mobile ont évidemment une autonomie sans recharge dont la durée est limitée.

        De ce fait un mobile fraudeur, qui pourrait s'appairer avec la base "en passant", ne détiendra pas le bon code bien longtemps puisque celui-ci changera à nouveau dès qu'une nouvelle présence du mobile légitime aura provoqué le changement du code de la base.

        Un autre avantage résulte du fait que, en cas de panne, il est possible de changer soit la base, soit le mobile sans se préoccuper de l'appairage; de même lors de la première installation de la base et du mobile, ceux-ci n'ont pas besoin d'avoir été préalablement appairés.

        Selon un mode préféré de mise en oeuvre du procédé, celui-ci comporte en outre l'étape suivante située après l'étape a) :

    b) comparaison du code d'identification préalable du mobile avec le code d'identification préalable de la base pour

        - en cas d'égalité passer immédiatement à l'étape suivante c),

        - en cas d'inégalité attendre un temps relativement long

avant de passer à l'étape suivante c).

Ainsi si la base et le mobile étaient déjà appairés, c'est le cas d'égalité, la modification du code ne requiert qu'un minimum de temps sans gêne notable pour l'usager légitime; par contre, en cas d'inégalité, un temps d'attente relativement long est imposé avant que la base et le mobile ne deviennent opérationnels, ceci constitue une sécurité vis à vis d'un mobile fraudeur qui ne pourra pas voler le code "en passant".

Le but de l'invention est plus spécialement atteint lorsque le code d'identification du mobile est mémorisé dans une mémoire volatile du type mémoire vive (RAM), notamment la RAM interne du microprocesseur du mobile puisque celle-ci est gratuite.

En effet on obtient ainsi la meilleure sécurité et la meilleure souplesse : d'une part les mobiles fabriqués en usine peuvent être "neutres", c'est à dire non appairés, d'autre part la RAM redevient neutre dès que les accus du mobile sont déchargés; la présence relativement fréquente du mobile sur la base est donc requise pour un usage normal.

La présente invention comporte d'autres avantages qui seront mieux compris à l'aide d'un exemple de réalisation non limitatif dont la description s'appuie sur les figures suivantes :

La figure 1 représente en vue cavalière externe une base et un mobile.

La figure 2 représente le schéma interne d'une base et d'un mobile.

La base et le mobile conformes à l'invention seront d'abord décrits pour ensuite mieux montrer les avantages du procédé selon l'invention.

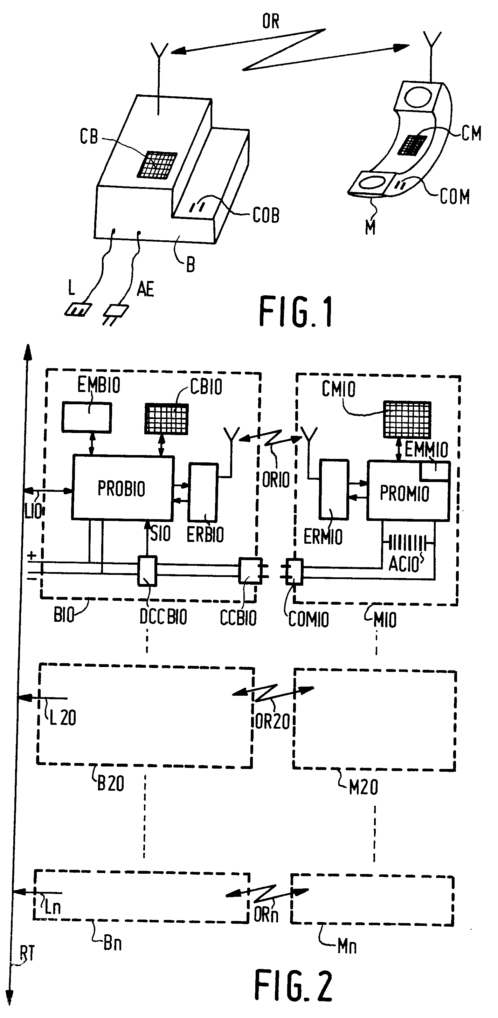

Sur la figure 1 figurent une base B et un mobile M qui constituent un poste téléphonique.

La base B est reliée au réseau téléphonique par une ligne L,et à une alimentation électrique AE.

Le mobile M ressemble à un combiné téléphonique usuel mais il n'y a pas de cordon et il communique avec la base par ondes radio OR notamment lorsque le mobile n'est pas sur la base ainsi que représentée par Ia figure 1.

Le mobile comporte un clavier CM pour, par exemple, effectuer une prise de ligne et/ou composer le numéro d'un correspondant. La base comporte un clavier CB pour, par exemple, mettre en service, interrupteur marche-arrêt, le poste téléphonique.

La base comporte un emplacement, représenté par décrochement sur la figure 1, pour y poser le mobile ; sur la figure 1 le mobile M n'est pas sur la base B ; lorsque le mobile M est posé sur la base à l'emplacement prévu, les contacts COM du mobile sont connectés aux contacts COB de la base. Cette connexion, à deux contacts au plus, est notamment utilisée pour recharger les accus du mobile car ceux-ci se déchargent au fur et à mesure des émissions et des réceptions radio.

Sur la figure 2 est représenté schématiquement un réseau téléphonique RT auquel est connectée notamment une population de bases B10, B20, ..., Bn reliées au réseau RT respectivement au moyen des lignes téléphoniques L10, L20, ..., Ln ; les repères de la figure 2 sont les mêmes que ceux de la figure 1 à ceci près qu'ils sont indicés ; chaque base est appairée avec, respectivement, un mobile M10, M20, ..., Mn avec lequel elle communique par ondes radio OR10, OR20, ..., ORn ; les ondes radio sont émises et reçues par les émetteurs-récepteurs respectivement de la base ERB10 et du mobile ERM10 ; une seule base et un seul récepteur sont représentés avec les détails nécessaires à la compréhension de l'invention.

Les autre postes base-mobile étant identiques, toutes les ondes radio utilisent le même canal d'où les risques d'interférences entre des postes d'abonnés géographiquement voisins. La base B10 comporte une source d'énergie électrique (+, -) pour alimenter le microprocesseur de contrôle PROB10 en l'occurrence un 7507 CMOS monochip avec 2 k octets de mémoire programme qu'on peut se procurer chez NEC; ces informations sont données à titre indicatif. L'alimentation est aussi reliée aux contacts de la base COB10 placés pour, lorsque le mobile est présent sur la base, se connecter aux contacts COM10 du mobile et ainsi recharger les accus AC10. Le détecteur DCCB10 de la base envoie un signal S10 au microprocesseur PROB10 dès qu'il détecte l'établissement d'un courant de charge qui est significatif d'une nouvelle présence de mobile sur la base ; un dispositif de détection différent, par exemple mécanique, aurait pu être utilisé pour détecter une nouvelle présence, mais le dispositif selon l'invention est particulièrement remarquable par sa simplicité.

Le microprocesseur de la base est aussi connecté à un clavier de commande CB10 qui peut comporter notamment un interrupteur de marche-arrêt, un bouton pour appeller le mobile quand l'usager ne sait plus où il l'a posé, ou encore une commande manuelle pour entrer un code d'identification personnel au cas où il conviendrait de conserver cette possibilité d'appairage conjointement avec le procédé d'appairage selon l'invention. Dans la mémoire connectée au microprocesseur il y a un emplacement EMB10 pour mémoriser le code d'identification résident, ou en cours, de la base, cette mémoire est de préférence électriquement effaçable du type EEROM. Le microprocesseur PROB10 est encore relié à bien d'autres organes non représentés et bien connus de l'homme du métier mais non nécessaires à la compréhension de l'invention.

Dans le mobile, les accus AC10 alimentent un microprocesseur PROM10, en l'occurence un 7507 comme susdit ; ici la technologique CMOS est quasiment impérative car il est avantageux de rechercher une consommation électrique minimum dans le mobile.

Le microprocesseur est relié à l'émetteur-récepteur ERM10, à un clavier CM10 et à d'autres organes non représentés connus de l'homme du métier. Le clavier CM10 comporte notamment un interrupteur de prise de ligne et des touches de numérotation d'appel.

Le microprocesseur PROM10 comporte une mémoire vive RAM interne qui est avantageusement utilisée pour y mémoriser à l'emplacement EMM10 le code d'identification résident, ou en cours, du mobile.

Dans l'état standard, la base et le mobile sont au repos ; en cas d'appel extérieur parvenant à la base en provenance du réseau téléphonique, l'état standard est interrompu et la base émet un message de commande pour "réveiller" le mobile qui signale l'appel à l'usager par des moyens connus : sonnerie usuelle, signal lumineux, ....

L'usager peut alors répondre en agissant sur l'interrupteur de prise de ligne ce qui provoque l'émission d'un message de commande à destination de la base, la base peut alors établir la communication proprement dite et celle-ci se poursuit, communication en cours, sous la forme d'un dialogue radio de signaux audio entre le mobile et la base ; la communication en cours prend fin quand l'usager agit à nouveau sur l'interrupteur de prise de ligne ce qui provoque l'émission d'un nouveau message de commande pour couper la communication au niveau de la base.

Il est connu que les messages de commande susdit soient authentifiés au moyen dudit code d'identification de la base et du mobile ; par contre il est remarquable que, selon l'invention, l'authentification s'effectue aussi en cours de communication pour éviter qu'un autre mobile ne vienne "se greffer" sur la communication en cours et se substitue, par exemple grâce à une puissance d'émission supérieure, au mobile initial; celui-ci pourrait ainsi se trouver "décroché" de sa base et dans l'impossibilité de couper la communication au niveau de la base ; celle-ci poursuivrait alors le dialogue au profit de l'autre mobile ; l'authentification en cours de dialogue peut s'effectuer, par exemple, périodiquement toutes les 30 secondes à l'initiative de la base qui émet un message de demandes de code d'identification à destination du mobile, quel qu'il soit, avec lequel la communication audio se poursuit ; si le message de réponse du mobile comporte le bon code d'identification la communication se poursuit, sinon elle est coupée par la base ; en cas d'absence de réponse la demande de code peut éventuellement être réitérée avant de couper la communication ; l'interruption du dialogue audio en cours provoqué pendant la durée de l'authentification ne doit pas gêner le dialogue ; cette durée doit donc être relativement courte, avantageusement 150 millisecondes, pour être quasiment inperceptible par l'usager. Lorsque la communication est coupée pour faute d'authentification, il y a ensuite retour à l'état standard, ou de repos.

Ce mode d'authentification pendant le cours de la communication est notamment remarquable par ce que c'est un "acte gratuit" en ce sens qu'il n'est associé à aucune commande qu'il
serait chargé d'authentifier.

Le procédé de gestion pour gérer l'appairage base-
mobile constitue un ensemble maintenant décrit dans son meilleur
mode de réalisation.

A partir de la détection d'une "nouvelle présence "
d'un mobile sur une base la procédure comporte les étapes suivantes :

a) interruption de l'état standard

b) comparaison du code d'identification préalable du mobile avec
le code d'identification préalable de la base pour :

- en cas d'égalité passer immédiatement à l'étape c)

- en cas d'inégalité attendre un temps relativement
long, avantageusement une heure, avant de passer à l'étape c)

c) remplacement du (des) code(s) d'identification (préalable(s)) de
la base et du mobile par un code commun mémorisé dans la base et dans le
mobile qui sont ainsi appairés; le nouveau code commun est avantageusement
généré par un algorithme aléatoire pour assurer l'unicité de chaque appairage.

d) vérification que les codes mémorisés dans la base et dans
le mobile présent sur la base sont identiques pour :

- en cas d'inégalité retourner à l'étape c) avec comptage
des tentatives infructueuses pour arrêter la boucle en cas de panne

- en cas d'égalité passer à l'étape suivante e)

e) retour à l'état standard.

Les étapes b) et d) sont des améliorations de l'invention qui réside essentiellement dans les étapes a), c) et e).

Durant l'étape b) le poste téléphonique n'est pas
opérationnel, à cause du défaut d'appairage, pendant le temps d'attente relativement long ; pour éviter cet inconvénient on peut
procéder à un appairage provisoire de la base et du mobile pour rendre
le poste opérationnel sans interruption se qui constitue une variante
b').

Le procédé d'appairage selon l'invention s'applique
aussi à des postes téléphoniques comportant plusieurs mobiles associés
à une seule base comportant un ensemble d'émissions à plusieurs canaux ;
avantageusement chaque mobile est affecté à un seul canal et chaque
appairage base-mobile est géré indépendamment l'un de l'autre. La
base dispose alors d'autant d'emplacements de mémoires, pour mémoriser

0173365

dans chacun un code d'identification, qu'il y a de mobiles à lui associer ; chaque mobile comporte en outre en dispositif qui le distingue des autres mobiles lorsqu'il est présent sur la base ; ce dispositif peut être un simple ergot.

Le procédé d'appairage selon l'invention et ses variantes, est notamment remarquable lorsque toutes les procédures s'effectuent en mode maitre-esclave, la base étant le maitre et le mobile l'esclave. Ceci revient à dire que toutes les décisions sont prises exclusivement par la base ; par exemple lorsque l'usager agit sur l'interrupteur de prise de ligne du mobile pour effectuer un appel, le mobile reste à l'état standard tant qu'il n'a pas reçu de la base un message signifiant que la prise de ligne demandée à effectivement été effectuée et ce n'est qu'à ce moment que le mobile permet, ou valide, la numérotation sur le clavier du numéro demandé.

Le mode maitre-esclave susdit est préféré car il assure la cohérence des états successifs respectivement de la base et du mobile.

Lorsque, pour des raisons techniques, la procédure d'appairage a une durée assez longue, même dans le cas d'égalité de l'étape b) (ou b'), ceci peut être un inconvénient pour l'utilisateur qui ne peut utiliser son mobile pendant les quelques secondes nécessaires ; il est alors intéressant d'effectuer d'abord la procédure en mode simulé puis de valider la simulation.

Le mode simulé requiert un emplacement de mémoire supplémentaire pour mémoriser le nouveau code d'identification qui est en attente de validation mais il présente l'avantage d'être interruptible ce qui fait que le poste téléphonique reste opérationnel pendant la durée de la procédure simulée ; ce n'est alors qu'à la fin de la simulation que le poste est rendu non-opérationnel uniquement pendant la durée de la validation ; cette durée est très courte puisque c'est un simple transfert en mémoire du code d'identification à partir de son emplacement de simulation jusqu'à son emplacement normal.

Dans le but d'améliorer la fiabilité des transmissions, notamment des messages de commandes, entre la base et le mobile, il a de plus été prévu des contacts électriques supplémentaires sur la

0173365

base et sur le mobile pour communiquer entre eux au moyen de ces contacts, et non plus par radio, lorsque le mobile est présent sur la base ; les aléas inhérents aux transmissions radio sont ainsi évités.

REVENDICATIONS:

1.      Procédé de gestion pour gérer l'appairage entre une base et un mobile sans cordon, l'ensemble base plus mobile constituant un poste téléphonique, la dite base et le dit mobile faisant partie d'une population de bases et de mobiles géographiquement dispersés, chaque base et chaque mobile comportant un emplacement de mémoire pour mémoriser un code d'identification, une base et un mobile étant dits appairés lorsque leurs codes d'identification respectifs sont identiques, un mobile pouvant être soit présent sur une base soit absent, chaque base et chaque mobile comportant chacun un ensemble d'émission et de réception de signaux radio pour, lorsque la base et le mobile sont appairés et notamment lorsque le mobile n'est pas présent sur la base, établir, poursuivre et couper une succession de communications téléphoniques, l'état standard d'une base et d'un mobile étant un état d'attente interruptible notamment par un appel extérieur parvenant à la base en provenance du réseau téléphonique ou encore par une demande d'appel en provenance du mobile, caractérisé en ce que, à chaque nouvelle présence d'un mobile sur une base, ledit code d'identification de la base et du mobile est modifié par une procédure qui comporte au moins les étapes suivantes :

    a) interruption de l'état standard

    c) remplacement du(des) code(s) d'identification de la base
       et du mobile présent sur la base par un nouveau code commun
       mémorisé dans la base et dans le mobile qui sont ainsi
       appairés

    e) retour à l'état standard.

2.      Procédé de gestion selon la revendication 1, caractérisé en ce que le nouveau code commun mémorisé à l'étape c) est généré par un algorithme aléatoire pour assurer l'unicité de l'appairage base-mobile.

3.      Procédé de gestion selon la revendication 1 ou 2 caractérisé en ce que, il comporte en outre l'étape suivante située après l'étape c) :

    d) vérification que les codes mémorisés dans la base et dans
       le mobile présent sur la base sont identiques pour
       - en cas d'inégalité retourner à l'étape c) avec comptage des

11

0173365

tentatives infructueuses pour arrêter la boucle
en cas de panne
- en cas d'égalité passer à l'étape suivante e).

4.     Procédé de gestion selon la revendication 1, 2 ou 3 caractérisé en ce que, il comporte en outre l'étape suivante située après l'étape a) :

  b) comparaison du code d'identification préalable du
     mobile avec le code d'identification préalable de
     la base pour
     - en cas d'égalité passer immédiatement à l'étape
       suivante c),
     - en cas d'inégalité attendre un temps relativement
       long avant de passer à l'étape suivante c).

5.     Procédé de gestion selon la revendication 1, 2 ou 3 caractérisé en ce que, il comporte en outre l'étape suivante située après l'étape a) :

  b') comparaison du code d'identification résidant du
      mobile avec le code d'identification résidant de la
      base pour
      - en cas d'égalité passer immédiatement à l'étape
        suivante c)
      - en cas d'inégalité procéder à un appairage provisoire de la base et du mobile puis attendre un
        temps relativement long avant de passer à
        l'étape suivante c).

6.     Procédé de gestion selon la revendication 4 ou 5 caractérisé en ce que, le temps relativement long de l'étape b (ou b') a une durée de une heure.

7.     Procédé de gestion selon l'une quelconque des revendications précédentes, une communication téléphonique étant en cours, ce qui implique qu'une base et un mobile en principe appairés procèdent entre eux à un dialogue radio de signaux audio, caractérisé en ce que, la base interrompt le dit dialogue pendant une durée relativement courte pour authentifier le mobile au moyen d'une procédure qui comporte au moins les étapes suivantes :

  m) interrogation du mobile pour lui demander son code
     d'identification résident

n) comparaison du code ainsi obtenu avec le
code d'identification résident de la base pour :
- en cas d'égalité rétablir le dialogue précédemment interrompu
- en cas d'inégalité couper la communication
en cours puis revenir à l'état standard.

8. Procédé de gestion selon la revendication 7, caractérisé en ce que la durée relativement courte de l'interruption du dit
dialogue est de 150 millisecondes.

9. Procédé de gestion selon l'une quelconque des revendications précédentes, une base comportant un ensemble d'émission
réception disposant de plusieurs canaux, caractérisé en ce que,
plusieurs mobiles peuvent être appairés à la dite base, en ce que
chaque mobile est affecté à un seul des dits canaux, et en ce que
chaque appairage base-mobile est géré indépendamment l'un de l'autre.

10. Procédé de gestion selon l'une quelconque des revendications précédentes caractérisé en ce que, toutes les procédures
s'effectuent en mode maître-esclave, la base étant le maître et le
mobile l'esclave.

11. Mobile pour la mise en oeuvre du procédé selon l'une
quelconque des revendications précédentes caractérisé en ce que,
son emplacement de mémoire pour mémoriser son code d'identification
est un emplacement de mémoire volatile, ou encore mémoire RAM.

12. Base et mobile pour la mise en oeuvre du procédé selon
l'une quelconque des revendications 1 à 10, chaque base et chaque
mobile comportant une source d'énergie électrique, celle du mobile
étant une source d'énergie rechargeable, chaque base et chaque mobile
comportant des contacts électriques pour se connecter en vue du
rechargement de la dite source d'énergie rechargeable, caractérisé en
ce que le rechargement s'effectue dès que les contacts sont connectés
lorsque le mobile est présent sur la base et en ce que la base comporte
un détecteur pour détecter l'établissement du courant de charge et,
dans ce cas, émettre un signal de "nouvelle présence" pour démarrer
la dite procédure d'appairage.

FIG.1

FIG.2

Office européen
des brevets

**RAPPORT DE RECHERCHE EUROPEENNE**

0173365
Numero de la demande

EP  85 20 1159

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl.4) |
|---|---|---|---|
| A | EP-A-0 074 940  (PORTAPHONE) <br><br> * Page 6, ligne 1 - page 10, ligne 5; figures * | 1,3,7, 9,10 | H 04 M  1/72 |
| | --- | | |
| A | GB-A-2 124 454  (FIEDLITY RADIO PLC) <br> * Page 1, ligne 102 - page 4, ligne 36; figures * | 1,3,7 | |
| | --- | | |
| A | PATENTS ABSTRACTS OF JAPAN, vol. 7, no. 40 (E-159)[1185], 17 février 1983, page 5 E 159; & JP - A - 57 190 432 (TEII SHII DENSHI K.K.) 24-11-1982 <br> * Résumé * | 1 | |
| | --- | | DOMAINES TECHNIQUES RECHERCHES (Int.Cl.4) |
| A | DE-A-1 930 532  (STANDARD ELEKTRIK LORENZ) <br> * Page 6, ligne 23 - page 9, ligne 12; figures * | 1,12 | H 04 M <br> H 04 Q |
| | ----- | | |

Le présent rapport de recherche a été établi pour toutes les revendications

| Lieu de la recherche | Date d'achèvement de la recherche | Examinateur |
|---|---|---|
| LA HAYE | 17-10-1985 | KEPPENS P.M.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82